# EUROPEAN PATENT APPLICATION

(11) **EP 1 403 803 A2**
(43) Date of publication of application: **31.03.2004**
(21) Application number: 03021557.8
(22) Date of filing: 24.09.2003
(51) Int. Cl.: G06F 17/60

(54) **Method and system for the management of end user subscriptions**

(30) Priority: 24.09.2002 US 413166 P; 28.04.2003 US 425083
(71) Applicant: Xerox Corporation, Rochester, New York 14644 (US)
(72) Inventor: Kanzinger, Charles G., Russell, OH 44022 (US)
(74) Representative: Grünecker, Kinkeldey, Stockmair & Schwanhäusser Anwaltssozietät

(57) **Abstract**

An end user managed subscription system includes a database for storing a plurality of subscription offerings, wherein a subscription offering includes physical materials to be distributed on a periodic basis for a fixed period of time to a selected number of recipients; a web based application operating on a host device, wherein the web based application includes a user interface; an order entry module for displaying the plurality of subscription offerings and avaiable options in the user interface, for prompting a user to make selections from the available options displayed in the user interface and, responsive to a user selection of a particular subscription offering, for enabling the particular subscription offering for that user; and a push distribution module, responsive to enablement of the particular subscription offering, for distributing the physical materials on the periodic basis for the fixed period of time to the selected number of recipients.

## Description

### FIELD OF THE INVENTION

This invention relates generally to systems and methods for managing end user subscriptions and more particularly, to a system and method which enables end users to subscribe to (or be removed from) company mailings and distributions of physical material.

### BACKGROUND OF THE INVENTION

Subscription services and distribution services are a common means of receiving information of various types. Subscriptions can be in the form of a hard copy media distribution (sent usually through the mail, whether postal service or internal enterprise mail) and in the form of electronic media. Subscriptions are a good way to receive content specific news, such as a newsletter for an organization and advertising and marketing materials, such as from establishments a user has frequented or indicated an interest in receiving such materials. Subscriptions are also was means of receiving updates to a technical journal, publication, equipment manual and software updates. Subscriptions are also frequently used for reordering of consumable supplies, such as paper and ink in the printing industry.

Within a particular enterprise, subscriptions can be used for many purposes. For example, members of the marketing and sales department would be interested in receiving information relating to changes and updates to the products they sell. The marketing and sales department would like to be able to distribute updates and promotional materials to sales agents and distributors. The person managing a marketing campaign, for example, would need to manually sift through a list of agents of the company and select those who should receive the material. Employees would then need to manually enter stock orders or requests for each item in the campaign and ship out the material. The lack of automation provides many opportunities for the wrong people to receive the material and for some people to be missed in the distribution. The manual entry also uses considerable time resources of the marketing team and warehouse personnel.

### SUMMARY OF THE INVENTION

The system and method of the invention allows end users to subscribe to (or be removed from) company mailings and distributions of physical material- almost as easily as they sign up for e-mail distribution lists. In the system and method of the invention, the end user may be an individual end user, i.e., the person who will receive the subscription, or an enterprise focal point for ordering subscriptions for other users. The system and method of the invention can be used, in one aspect, to enable material managers and marketing managers to provide end users with the ability to manage subscriptions/distribution lists for company collateral, item revisions, and usage/repair manuals needed by remote staff or agents of the organization, thus decreasing the amount of labor needed to manage a subscription or distribution list and increasing data accuracy.

An end user managed subscription system, according to one aspect of the invention, includes a database for storing a plurality of subscription offerings, wherein a subscription offering includes physical materials to be distributed on a periodic basis for a fixed period of time to a selected number of recipients; a web based application operating on a host device, wherein the web based application includes a user interface; an order entry module for displaying the plurality of subscription offerings and available options in the user interface, for prompting a user to make selections from the available options displayed in the user interface and, responsive to a user selection of a particular subscription offering, for enabling the particular subscription offering for that user; and a push distribution module, responsive to enablement of the particular subscription offering, for distributing the physical materials on the periodic basis for the fixed period of time to the selected number of recipients.

In accordance with another feature of the invention, the order entry module displays a link for managing existing subscriptions in the user interface, wherein responsive to a user selection of the link, the order entry module displays the user's existing subscriptions and options available, and responsive to the user's modification of an existing subscription and options, enables the selected modifications and options. The order entry module, for each subscription offering, may display an option for number of recipients. The order entry module, responsive to a user selection of a particular subscription offering, may also prompt the user for authorization to ship and charge the user for the particular subscription.

The end user managed subscription system may provide a list of available options for each subscription offering, including quantity of physical materials, number of recipients and address for each recipient. The end user managed subscription system may also include a tracking module for tracking status of user selected subscriptions. Examples of physical materials which may be managed by the end user managed subscription system include collateral, manuals, manual updates and revisions and newsletters.

A method of enabling an end user to manage subscriptions, according to another aspect of the invention, includes storing a plurality of subscription offerings in a database,
wherein a subscription offering includes physical materials to be distributed on a periodic basis for a fixed period of time to a selected number of recipients; providing a web based application operating on a host device, wherein the web based application includes a user interface; displaying the plurality of subscription offerings and available options in the user interface; prompting a user to make selections from the available options displayed in the user interface; responsive to a user selection of a particular subscription offering, enabling the particular subscription offering for that user; and responsive to enablement of the particular subscription offering, distributing the physical materials on the periodic basis for the fixed period of time to the selected number of recipients.

An end user managed subscription process in combination with a distribution process, according to another aspect of the invention, includes: creating a job including items for distribution; providing one or more identifiers who subscribe to the items for distribution; identifying items (including subscriptions) to be distributed; associating the items to the one or more identifiers who subscribe to the items for distribution; entering the price for each item; creating one or more requisitions to reserve the items for the distribution; calculating the price; enabling the end user to select subscriptions and place them in the end user's shopping cart; and sending bills to a cost center.

A distribution process including an end user managed subscription process, according to yet another aspect of the invention, includes: identifying a job including items for a subsequent distribution; providing one or more requisition tasks in the job to reserve items from an inventory for the distribution; enabling an end user to select subscriptions; performing a distribution task to generate an item list, including selected subscriptions, and people list for the distribution; calculating costs; performing packaging instruction shipping information; and allocating charges.

### BRIEF DESCRIPTION OF THE DRAWINGS

Fig. 1 is a screen shot of an item type setup dialog box;
Fig. 2 is a screen shot of an item setup dialog box;
Fig. 3 is a screen shot of the dialog box of Fig. 2 with subscription item type entered;
Fig. 4 is a screen shot of a subscription management window - maintenance mode dialog box;
Fig. 5 is a screen shot of subscription management window - sign up mode dialog box;
Fig. 6 is a screen shot of a ReqDirect screen with subscriptions need renewal hyperlink;
Fig. 7 is a screen shot of a ReqDirect user screen with subscriptions summary hyperlink;
Fig. 8 is a screen shot of a ReqDirect user screen for editing subscriptions;
Fig. 9 is a screen shot of a ReqDirect user screen for subscription sign up;
Fig. 10 is a screen shot of a ReqDirect user screen for subscription summary; and
Fig. 11 is a flow chart of a marketing and subscription management push distribution system.

### DESCRIPTION OF THE PREFERRED EMBODIMENTS

The system and method of the invention can be implemented on a stand-alone basis or as part of another management system. For example, the end user managed subscription system and method can be used with software products, such as the Spectrum Plus (client/server fully integrated administrative, purchasing, invoicing, order entry, warehouse management, and digital image production system), ReqDirect (web based order entry system), and InteliJob (Subscription Management system) of the Bradley Company, a wholly-owned subsidiary of Xerox Corporation. For exemplary purposes, an embodiment of the invention will be described as it was implemented as part of Spectrum Plus and InteliJob products. In this embodiment of the end user managed subscription process, when the end user of a web order entry system (such as ReqDirect) is adding normally offered Items to the end user's shopping cart, the end user can add items that are defined as a subscriptions. Users can also manage their existing subscriptions from a link on the shopping cart. The user can specify what quantity of the various subscriptions they need to receive, in case they order for a regional office, and adjust the quantity of previous subscriptions.

The end user managed subscription system may be fully integrated with Spectrum Plus/ReqDirect. This means that end user will not need to go to a separate place to manage a subscription. Their subscriptions can be adjusted while they are doing their normal Stock/POD Requisitions/Order entry. When a user enters a Subscription Item, the system may be configured to automatically prompt the user to enter in the quantity of that item that they wish to receive. This enables a divisional office to request a standard quantity of packet so they can provide one to each of the local employee. The end user managed subscription system may also store a history of all the transactions with subscriptions, providing the ability to reproduce prior subscriptions, and to audit which employees were shipped various materials. The system may also be configured to prompt the user when their subscriptions need to be renewed.

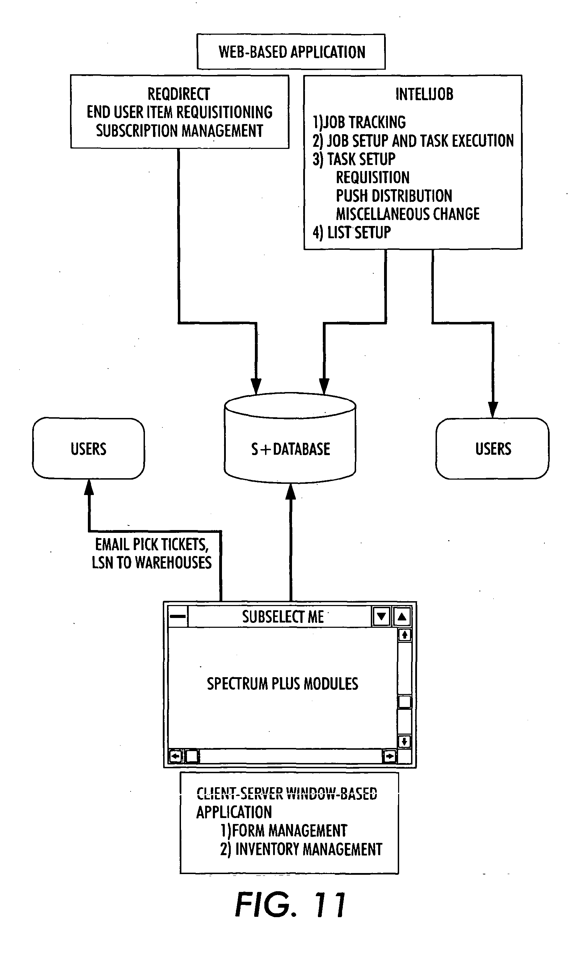

Fig. 11 is a flow chart of a Spectrum Plus system, which includes an end user managed subscription system. Referring to Fig. 11, the system includes a web-based application on the server side. A ReqDirect module provides for end user item requisitioning including subscription management. The IntelliJob module provides job tracking, job setup and task execution, task setup (including requisition, push distribution, miscellaneous changes) and list setup. Data is stored on a database which is accessed by both ReqDirect and InteliJob. Users, such as email planners and account managers, have access to InteliJob for defining setting up the various items and subscriptions which will be included in a marketing job. Other users have access to the system on the client side, for email pick tickets, LSN to warehouses, etc. The end user has a client-server application which provides form management and inventory management. Spectrum plus modules display the various options available.

The end user managed subscription system as implemented in Spectrum Plus off loads much of the work for managing subscriptions to the subscriber. The system allows requesters to sign up for subscriptions by requisitioning an item. There are two primary users of this system: ReqDirect users and System Administrators. The system is implemented to allow subscribers to sign up for subscriptions in ReqDirect. The end user managed subscription system uses Push Distributions (described below).

### Main Processes.

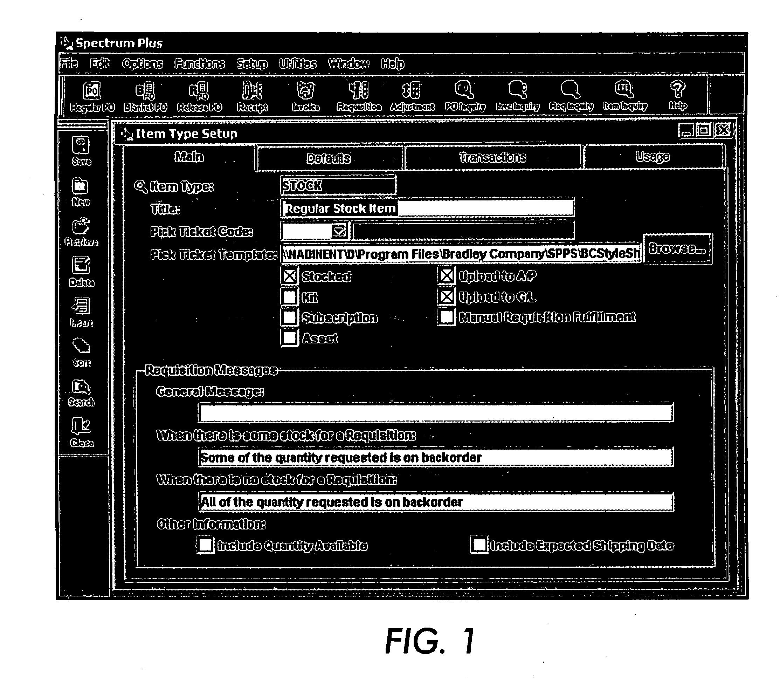

Item Type Setup. Referring to Fig. 1, System Administrator opens the Item Type Setup window. Subscription check box appears below the Kit check box. Subscription check box initially displays unchecked. System Administrator clicks the Subscription check box. If the Subscription check box is unchecked the following occurs. If either the Stocked, Kit, or Allow PrintLink Setup check box on the Transactions tab is checked, the following occurs. A message displays saying, "A subscription Item Type cannot be a Stock Item, Kit Item, or PrintLink Item. Please uncheck the Stocked, Kit, and Allow PrintLink Setup check boxes and try again. [OK]". If neither the Stocked, Kit nor Allow PrintLink Setup check box on the Transactions tab is checked, the following occurs. The Stocked, Kit, and Allow PrintLink Setup check boxes become disabled. The Subscription check box becomes checked. If the Subscription check box is checked, the following occurs. The Stocked, Kit, and Allow PrintLink Setup check boxes become enabled. The Subscription check box becomes unchecked. System Administrator retrieves an Item Type. If the retrieved Item Types Subscription check box is checked, the Stocked, Kit, and Allow PrintLink Setup check boxes become disabled.

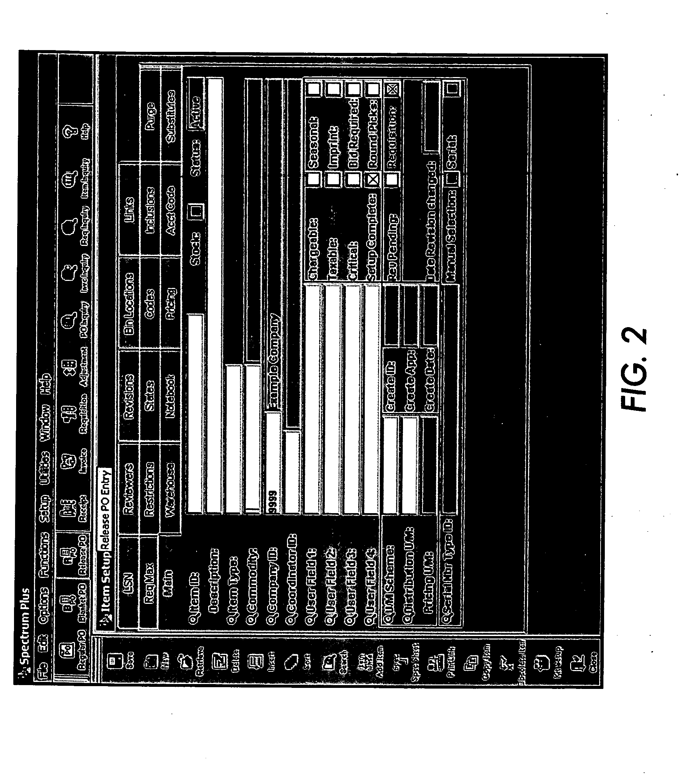

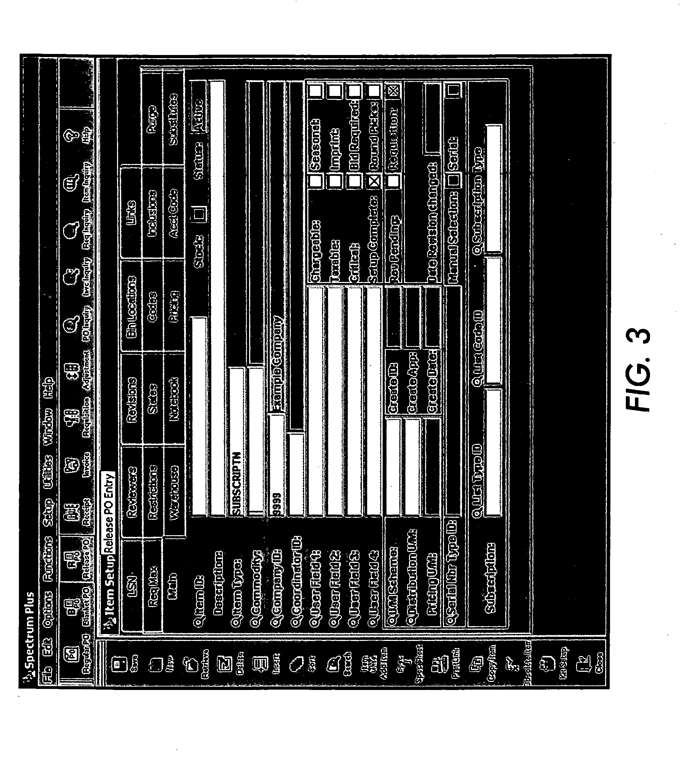

Item Setup. Referring to Fig. 2, System Administrator opens the Item Setup window. More space appears below the Serial Nbr Type ID field. System Administrator enters an Item Type and the following occurs. Standard Item Type validations are executed. If the entered Item Type passes validation, the following occurs. If the entered Item Type has the Subscription check box checked and the customer has rights to InteliJob, the List Type ID, List Code ID, and Subscription Type fields become visible. (See Fig. 3.) If the entered Item Type has the Subscription check box unchecked or the customer does not have rights to InteliJob, the List Type ID, List Code ID, and Subscription Type fields become invisible. If the entered Item Type does not pass validation or if the customer does not have right to InteliJob, the following occurs. The List Type ID, List Code ID, and Subscription Type fields become invisible.

System Administrators Searches for a List Type ID. A standard Mini Search window opens. If no List Code ID exists, the Mini Search window displays all Type IDs set up in the Type Setup window with the Allow InteliJob List Setup check box checked. If a List Code ID exists, the Mini Search window displays only the Type IDs associated with the List Code ID in the Code Setup window that have the Allow InteliJob List Setup check box checked in the Type Setup window. The selected List Type ID defaults into the List Type ID field and the

List Type ID Validation is executed.

System Administrator enters a List Type ID.

List Type ID Validation is executed.

System Administrators searches for a List Code ID. A standard Mini Search window opens. If no List Type ID exists, the Mini Search window displays all Code IDs associated in the Code Setup window with a Type ID that have the Allow InteliJob List Setup check box checked. If a List Type ID exists, the Mini Search window displays only the Code IDs associated with the List Type ID in the Code Setup window. The selected List Code ID defaults into the List Code ID field and the List Code ID Validation is executed.

System Administrators enters a List Code ID. List Code ID Validation is executed.

System Administrator searches for a Subscription Type. A standard Mini Search window opens. The Mini Search window displays all Code IDs associated with a Type ID of "SUBSTYPE" in the Code Setup window. The selected Subscription Type defaults into the Subscription Type field and the
Subscription Type Validation is executed.

System Administrator enters a Subscription Type.

Subscription Type Validation is executed.

System Administrator accesses the save functions to save the item to the database. If the entered Item Type is a subscription (i.e., has the Subscription check box checked in Item Type Setup) and if the customer has rights to InteliJob, the List Type ID, List Code ID, and Subscription Type are treated as required columns (i.e., the item cannot be saved to the database without entering valid values for these fields. The standard required column message displays to inform the System Administrator about the required columns.) If the entered Item Type is not a subscription (i.e., has the Subscription check box checked in Item Type Setup) or if the customer does not have rights to InteliJob, the List Type ID, List Code ID, and Subscription Type are not treated as required columns and the System Administrator can save the item without entering these fields.

System Administrator Retrieves an Item. The normal Item Retrieve function is executed. If the retrieved Item has an Item Type with the Subscription check box checked and the customer has rights to InteliJob, the List Type ID, List Code ID, and Subscription Type fields become visible. If the retrieved Item has an Item Type with the Subscription check box unchecked or the customer does not have rights to InteliJob, the List Type ID, List Code ID, and Subscription Type fields become invisible.

Kit Setup. User enters an Item ID. The current Kit Item validation occurs. If the entered Item ID has an Item Type with the Subscription check box checked and the customer has rights to InteliJob the following occurs. A message displays stating, "A subscription item cannot be added to a kit. Please enter a different item and try again. [OK]". The Item ID is blanked out.

Item Inquiry. User retrieves an Item. When the user clicks on the Item node or Setup Information node, the following information displays on the right. If the retrieved Item has an Item Type with the Subscription check box checked and the customer has rights to InteliJob, the List Type ID, List Code ID, and Subscription Type fields become visible. (Note: Format is similar to Item Setup). If the retrieved Item has an Item Type with the Subscription check box unchecked or the customer does not have rights to InteliJob, the List Type ID, List Code ID, and Subscription Type fields become invisible. (Note: Format does not change.)

Requisition Entry. User enters an Item ID The current Requisition Item validation occurs. If the entered Item ID has an Item Type with the Subscription check box checked, the customer has rights to InteliJob, and a Requester has been entered in the Requester ID field, the following-occurs. A message-displays stating, "A subscription item can only be entered if a Requester ID has not been entered on the Header. Please try entering this Item on a new requisition. [OK]" The Item ID is blanked out. User completes entering an Item ID, Revision Code, Warehouse ID, U/M, and Quantity on the requisition detail. If the entered Item ID has an Item Type with the Subscription check box checked and the customer has rights to InteliJob, the following occurs.

The system checks to see if the Requester has an active subscription by doing the following. The system checks to see if the Requester exists in the list defined by the Item's List Type, List Code, and Subscription Type and if the lists Begin Date is less than or equal to the current date and the list's End Date is greater than or equal the current date. If the configuration setting "InteliJob", "ListUniqueSubscriptionType" is "1" then the system searches for a Requester in a list using the Item's List Type, List Code, and Subscription Type. If the configuration setting "InteliJob", "ListUniqueSubscriptionType" is "0" or not "1" then the system searches for a Requester in a list using the Item's List Type and List Code. If the Requester exists in the list defined by the Item's List Type, List Code, and/or Subscription Type and if the End Date is less than the current date, the Requester has an inactive subscription. If the Requester exists in the list defined by the Item's List Type, List Code, and/or Subscription Type and if the Begin Date is greater than the current date, the message "You cannot request for this item because the subscription will not be activated until <subscription begin date>. Please contact your System Administrator." appears and the system blanks out the Item ID entered. If the Requester has an active subscription, the Subscription Management Pop-up window opens in maintenance mode. If the Requester does not have an active subscription, the Subscription Management Pop-up window opens in sign up mode.

Requisition Kit Component Selection. User enters an Item ID. The current Kit Item validation occurs. If the entered Item ID has an Item Type with the Subscription check box checked and the customer has rights to InteliJob the following occurs. A message displays stating, "A subscription item cannot be added to a kit. Please enter a different item and try again. [OK]". The Item ID is blanked out.

Pick Ticket. Modify pick ticket to disburse an item with 0 price if the requisition line item's hidden field, No Charge, is set to "Y".

### ReqDirect.

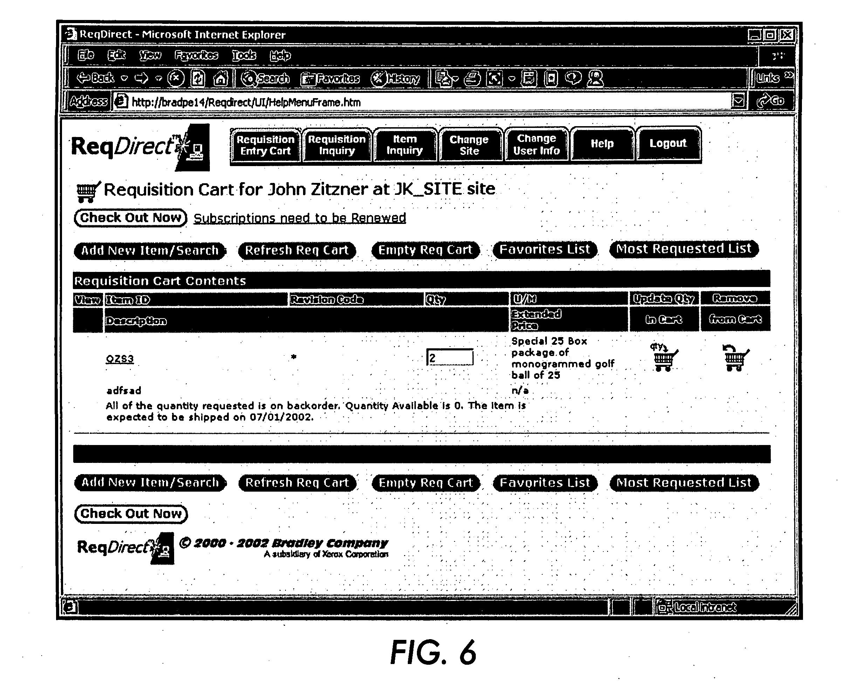

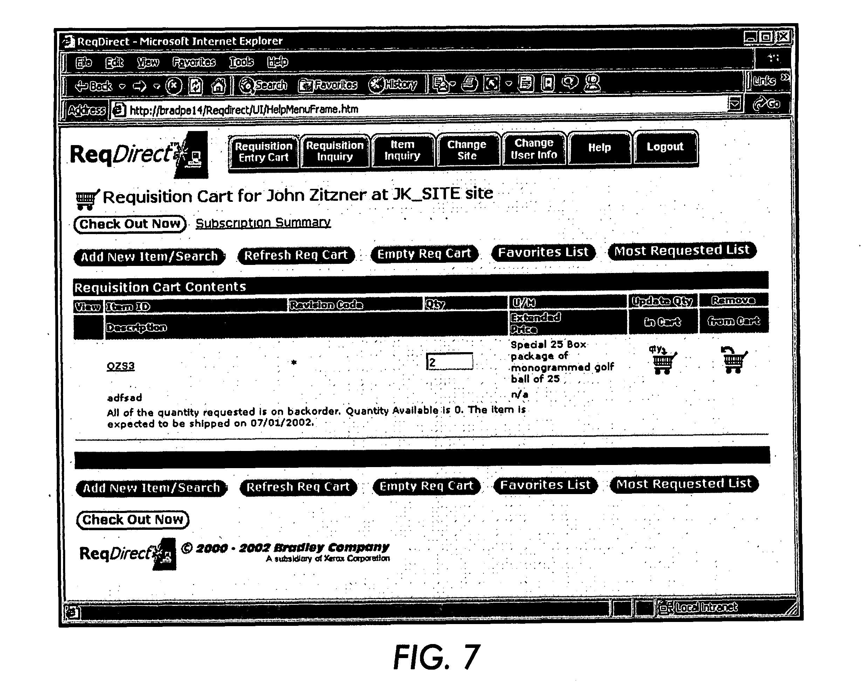

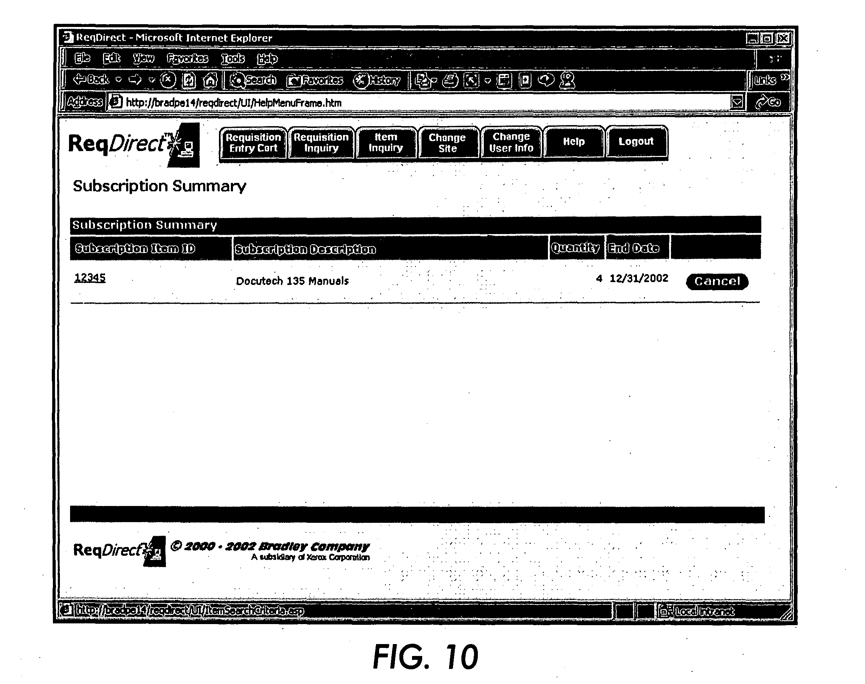

Requisition Entry Cart. User opens the Requisition Entry Cart. The Requisition Entry Cart displays as it normally does. If the Requester exists in a list that needs renewal, the system displays the Subscription Need to be Renewed hyperlink in red. (See Fig. 6 Renewal Subscriptions Renewal). A list needs renewal when the current date is greater than or equal to the Begin Date, less than or equal to the End Date, and greater than or equal to the End Date minus a month. If all the Requester's active lists do not need renewal the Subscription Summary hyperlink displays in blue. (See Fig. 7 Subscription Summary). Requester clicks the Subscription Need to be Renewed or Subscription Summary hyperlink and the Subscription Summary page opens. (See Fig. 10 Subscription Summary.)

Add Item to Cart. Requester clicks the Add to Cart icon to add a Subscription Item to the cart. The system checks to see if the Requester has an active subscription by performing the following. The system checks to see if the Requester exists in the list defined by the Item's List Type, List Code, and Subscription Type and if the lists Begin Date is less than or equal to the current date and the lists End Date is greater than or equal the current date. If the configuration setting "InteliJob", "ListUniqueSubscriptionType" is "1" then the system searches for a Requester in a list using the Item's List Type, List Code, and Subscription Type. If the configuration setting "InteliJob", "ListUniqueSubscriptionType" is "0" or not "1" then the system searches for a Requester in a list using the Item's List Type and List Code. If the Requester exists in the list defined by the Item's List Type, List Code, and/or Subscription Type and if the End Date is less than the current date, the Requester has an inactive subscription. If the Requester exists in the list defined by the Item's List Type, List Code, and/or Subscription Type and if the Begin Date is greater than the current date, the message "You cannot request for this item because the subscription will not be activated until <subscription begin date>. Please contact your System Administrator." appears and users will be redirected to the Requisition Cart Page. If the Requester has an active subscription, theEdit Subscription Page opens. If the Requester does not have an active subscription, the Subscription Sign Up Page opens.

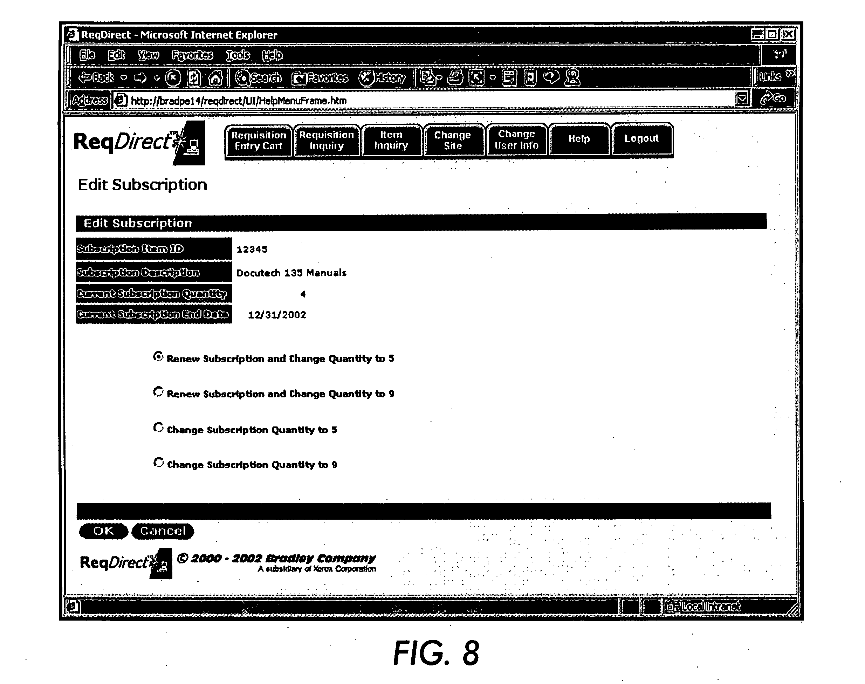

Edit Subscription Page. Page Opens (See Fig. 8 Edit Subscription Page.) Subscription Item ID field displays the requested Item ID. Subscription Description field displays the requested Item ID's Description. Current Subscription Quantity displays the Quantity from the list defined by the Requester and Item's List Type, List Code, and Subscription Type. Current Subscription End Date displays the End Date from the list defined by the Requester and Item's List Type, List Code, and Subscription Type. Renew Subscription and Change Quantity to « Quantity Requested» radio button is enabled and selected. Renew Subscription and Change Quantity to «Current Subscription Quantity + Quantity Requested» radio button is enabled. Change Subscription Quantity to « Quantity Requested>> radio button is enabled. Change Subscription Quantity to <<Current Subscription Quantity + Quantity Requested» radio button is enabled. OK button is enabled. Cancel button is enabled. User selects the Change Subscription Quantity to « Quantity Requested» radio button. User selects the Change Subscription Quantity to «Current Subscription Quantity + Quantity Requested» radio button. User selects the Renew Subscription and Change Quantity to «Current Subscription Quantity + Quantity Requested» radio button. User selects the Renew Subscription and Change Quantity to << Quantity Requested» radio button. User clicks the OK button.

If the Change Subscription Quantity to «Current Subscription Quantity + Quantity Requested» is selected the following occurs: A hidden field, Subscription Quantity, in the cart is updated with the new potential List Quantity of «Current Subscription Quantity + Quantity Requested». The List's Quantity is updated in the database when the subscription item in the cart is submitted. A hidden field in the cart, Comments, is updated with the comment, "Subscription updated to a total quantity of « Current Subscription Quantity + Quantity Requested>>." The requester is charged the amount they requested.

If the Change Subscription Quantity to « Quantity Requested» is selected the following occurs: A hidden field in the cart, Subscription Quantity, is updated with the new potential List Quantity of « Quantity Requested». The List's Quantity is updated in the database when the subscription item in the cart is submitted. A hidden field in the cart, Comments, is updated with the comment, "Subscription updated to a total quantity of «Quantity Requested>>." If the Quantity Requested is greater than the Current Subscription Quantity the following occurs: Cart Quantity is changed to the Quantity Requested - Current Subscription Quantity. The U/M in the cart changes to the base unit of measure and the requester is charged for the new quantity. If the Quantity Requested is less than the Current Subscription Quantity the following occurs: Quantity Requested becomes the Cart Quantity. The U/M in the cart changes to the base unit of measure. Price of 0 displays for the item. (i.e., the requester does not get charged for this item.) A hidden field in the cart, No Charge, is set to "Y".

If the Renew Subscription and Change Quantity to «Current Subscription Quantity + Quantity Requested» is selected the following occurs: A hidden field in the cart, Subscription End Date, is updated with the new potential List End Date of End Date + a year. The List's End Date is updated in the database when the subscription item in the cart is created on the Requisition. A hidden field in the cart, Subscription Quantity, is updated with the new potential List Quantity of «Current Subscription Quantity + Quantity Requested». The List's Quantity is updated in the database when the subscription item in the cart is submitted. A hidden field in the cart, Comments, is updated with the comment, "Subscription updated to a total quantity of <<Current Subscription Quantity + Quantity Requested>> and is good through «List's End Date + 1 year»." The requester is charged the amount they requested. If the Renew Subscription and Change Quantity to « Quantity Requested» is selected the following occurs: A hidden field in the cart, Subscription End Date, is updated with the new potential List End Date of End Date + a year. The List's End Date is updated in the database when the subscription item in the cart is submitted. A hidden field in the cart, Subscription Quantity, is updated with the new potential List Quantity of « Quantity Requested». The List's Quantity is updated in the database when the subscription item in the cart is submitted. A hidden field in the cart, Comments, is updated with the comment, "Subscription updated to a total quantity of « Quantity Requested» and is good through «List's End Date + 1 year»." If the Quantity Requested is greater than the Current Subscription Quantity the following occurs: Cart Quantity is changed to the Quantity Requested - Current Subscription Quantity. The U/M in the cart changes to the base unit of measure and the requester is charged for the new quantity. If the Quantity Requested is less than the Current Subscription Quantity the following occurs: Quantity Requested becomes the Cart Quantity. The U/M in the cart changes to the base unit of measure. Price of 0 displays for the item. (i.e., the requester does not get charged for this item.) A hidden field in the cart, No Charge, is set to "Y". Requester clicks the Cancel button. Item does not get added to the cart and the requester is taken back to the page they came from.

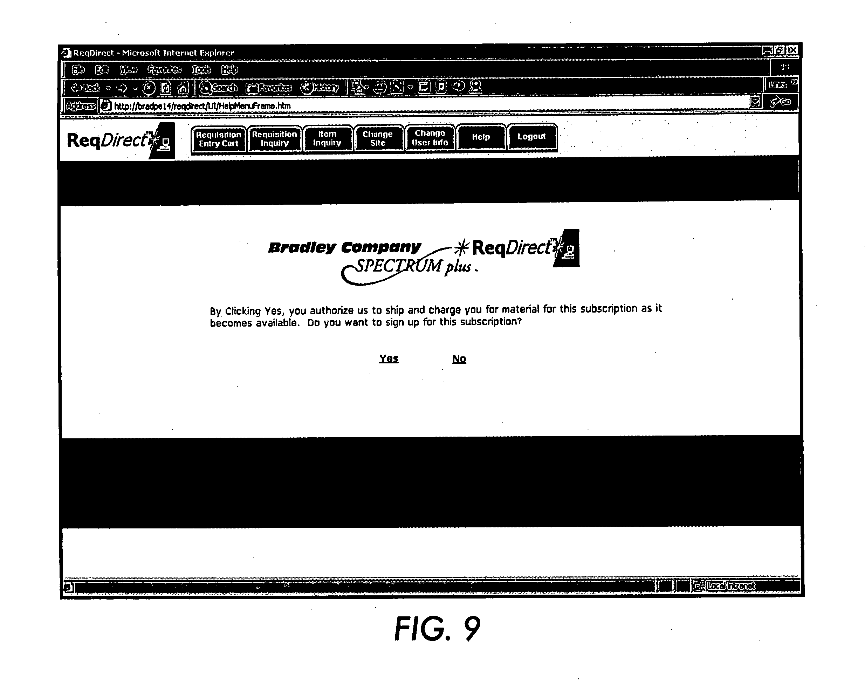

Subscription Sign Up Page. Page Opens (See Fig. 9 Subscription Sign Up Page.) Following message displays, "By Clicking Yes, you authorize us to ship and charge you for material for this subscription as it becomes available. Do you want to sign up for this subscription?" Requester clicks the Yes hyperlink, the following occurs: A hidden field in the cart is updated with the new potential List End Date of Current System Date + a year. The List's End Date is updated in the database when the subscription item in the cart is submitted. A hidden field in the cart is updated with the new potential List Quantity of « Quantity Requested». The List's Quantity is updated in the database when the subscription item in the cart is submitted. A hidden field in the cart is updated with the comment, "Subscription created for a total quantity of « Quantity Requested» and is good through «Current Date + 1 year»." The requisition line items Comments get updated with this value when the cart is submitted. Requester clicks the No hyperlink. The Requester is returned to the page they came from.

Subscription Summary. Page opens (See Fig: 10 Subscription Summary.) All active subscriptions display in a table with the following fields:
View Item Link icon displays based on standard functionality.
Cancel Subscription button
Subscription Item ID
Subscription Description
Quantity.
End Date

Subscription table orders by the list End Date in ascending order. User selects the Cancel Subscription button. Confirmation page displays asking requester, "Are you sure you want to cancel subscription «Subscription Item ID>>? [Yes/No]". If yes, the List's End Date is set to the current date minus 1 day in the database and the subscription is removed from the list. If no, the user is taken back to the Subscription Summary page and no changes occur to the user.

Submit Requisition. Function performs like it currently does with the following additions. The requisition line Comments get updated to the hidden cart field, Comments. The hidden requisition line field, No Charge, is updated to the hidden cart field, No Charge. If an item in the Cart is a subscription item, the following occurs: If neither the Subscription End Date or Subscription Quantity have values, the following occurs: A message displays saying, "Item «Cart Item ID>> has been switched to a subscription item between the time you added it to the cart and submitted the requisition. If you would still like to add this item to the requisition please remove the item from the cart and add it again. To submit this requisition, remove this item from the cart and check out the cart again. [OK]" A requisition does not get created and the user gets taken back to the Add Item to Cart page. If the Requester has or had a subscription for the item, the following occurs: The Lists End Date is updated to the hidden cart field, Subscription End Date. The lists Quantity is updated to the hidden cart field, Subscription Quantity. If the Requester does not have a subscription for the item, the following occurs: The list is updated in the database with the following values:
Person ID = Requester ID
Code Type = the item's List Type ID
Code ID = the item's List Code ID
Subscription Type = the item's Subscription Type
Start Date = the current date
End Date = the current date + 1 year
Quantity = Requested Quantity
Sub-Processes.

List Type ID Validation. If the entered List Type ID has been associated with a Type ID with the Allow InteliJob List Setup check box checked, the following occurs: If the List Type ID is blank, the value is accepted. If the List Type ID is not blank and the List Type ID has been associated with the List Code ID in the Code Setup window, the value is accepted. If the List Type ID is not blank and the List Type ID has not been associated with the List Code ID in the Code Setup window, the following occurs: A message displays saying, "List Type ID «entered List Type ID>> is not valid for the List Code ID «entered List Code ID>>. Please enter a valid List Type ID or use the Search window." The List Type ID is blanked out. If the entered List Type ID has not been set up in the Type Setup window with the Allow InteliJob List Setup check box checked, the following occurs: A message displays saying, "The List Type ID entered is invalid. Please enter a valid List Type ID or use the Search window. [OK]" The List Type ID is blanked out.

List Code ID Validation. If the entered List Code ID has been associated with a Type ID with the Allow InteliJob List Setup check box checked, the following occurs. If the List Type ID is blank, the value is accepted. If the List Type ID is not blank and the List Type ID has been associated with the List Code ID in the Code Setup window, the value is accepted. If the List Type ID is not blank and the List Type ID has not been associated with the List Code ID in the Code Setup window, the following occurs: A message displays saying, "List Code ID «entered List Code ID>> is not valid for the List Type ID «entered List Type ID>>. Please enter a valid List Code ID or use the Search window." The List Code ID is blanked out. If the entered List Code ID has not been associated with a Type ID that has the Allow InteliJob List Setup check box checked, the following occurs: A message displays saying, "The List Code ID entered is invalid. Please enter a valid List Code ID or use the Search window. [OK]" The List Code ID is blanked out.

Subscription Type Validation. If the entered Subscription Type has been associated with a Type ID of "SUBSTYPE" in the Code Setup window, the value is accepted. If the entered Subscription Type has not been associated with a Type ID of "SUBSTYPE" in the Code Setup window, the following occurs: A message displays saying, "The Subscription Type entered is invalid. Please enter a valid Subscription Type or use the Search window. [OK]" The Subscription Type is blanked out.

### Subscription Management Pop-up Window

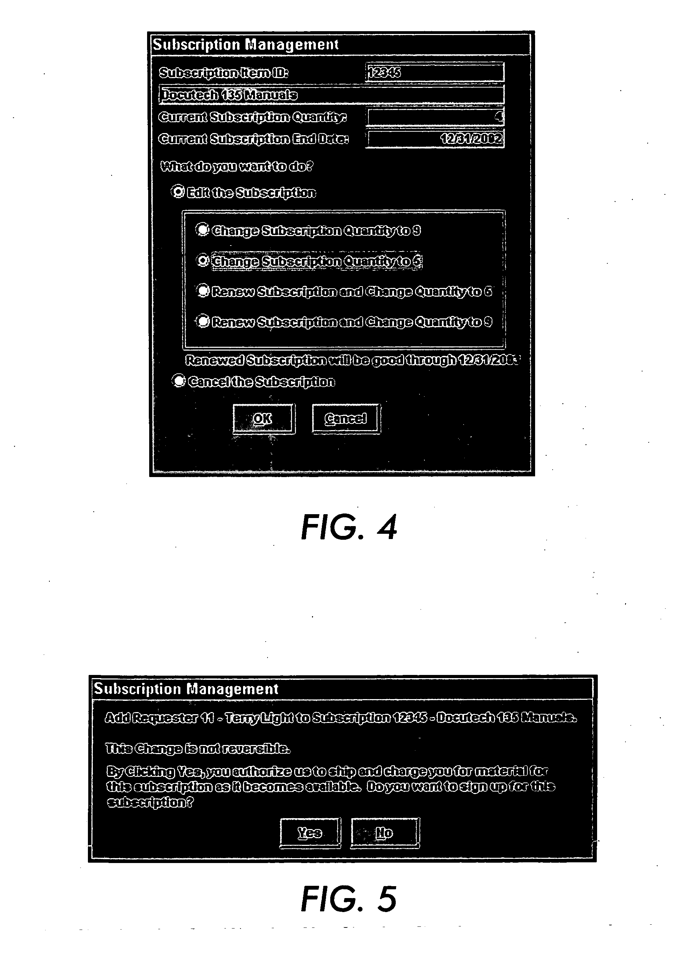

Maintenance Mode. Window opens (Se Fig. 4 Subscription Management Window - Maintenance Mode). Subscription Item ID field displays the requested Item ID. Subscription Description field displays the requested Item ID's Description. Current Subscription Quantity displays the Quantity from the list defined by the Requester and Item's List Type, List Code, and Subscription Type. Current Subscription End Date displays the End Date from the list defined by the Requester and Item's List Type, List Code, and Subscription Type. Edit the Subscription radio button is enabled and selected. Change Subscription Quantity to «Current Subscription Quantity + Quantity Requested» radio button is enabled and selected. Change Subscription Quantity to « Quantity Requested» radio button is enabled. Renew Subscription and Change Quantity to «Current Subscription Quantity + Quantity Requested» radio button is enabled. Renew Subscription and Change Quantity to « Quantity Requested» radio button is enabled. Cancel the Subscription radio button is enabled. OK button is enabled. Cancel button is enabled. User selects the Edit the Subscription radio button. Change Subscription Quantity to «Current Subscription Quantity + Quantity Requested» radio button is enabled. Change Subscription Quantity to « Quantity Requested» radio button is enabled. Renew Subscription and Change Quantity to «Current Subscription Quantity + Quantity Requested» radio button is enabled. Renew Subscription and Change Quantity to « Quantity Requested» radio button is enabled. User selects the Change Subscription Quantity to « Quantity Requested» radio button. User selects the Change Subscription Quantity to «Current Subscription Quantity + Quantity Requested» radio button. User selects the Renew Subscription and Change Quantity to «Current Subscription Quantity + Quantity Requested» radio button. User selects the Renew Subscription and Change Quantity to « Quantity Requested» radio button. User selects the Cancel Subscription radio button. Change Subscription Quantity to «Current Subscription Quantity + Quantity Requested» radio button is disabled. Change Subscription Quantity to « Quantity Requested» radio button is disabled. Renew Subscription and Change Quantity to «Current Subscription Quantity + Quantity Requested» radio button is disabled. Renew Subscription and Change Quantity to « Quantity Requested» radio button is disabled. User clicks the OK button. If the Edit the Subscription radio button is selected, the following occurs: If the Change Subscription Quantity to «Current Subscription Quantity + Quantity Requested» is selected the following occurs: The List's Quantity is updated to the «Current Subscription Quantity + Quantity Requested» in the database. The Requisition Line Item's Comments get pre-appended with the following value, "Subscription updated to a total quantity of «Current Subscription Quantity + Quantity Requested»." (Note: This value does not get updated to the database until the Requisition Line is updated.) The Requester is charged the full amount on the Requisition. If the Change Subscription Quantity to « Quantity Requested» is selected the following occurs: The List's Quantity is updated to the « Quantity Requested» in the database. The Requisition Line Item's Comments get pre-appended with the following value, "Subscription updated to a total quantity of « Quantity Requested»." (Note: This value does not get updated to the database until the Requisition Line is updated.) If the Quantity Requested is greater than the Current Subscription Quantity the following occurs: Quantity Requested is changed to the Quantity Requested - Current Subscription Quantity. The U/M changes to the base unit of measure. If the Quantity Requested is less than the Current Subscription Quantity the Quantity Requested the following occurs: The Quantity Requested remains the same. Price of 0 displays for the Requisition Line Item. (i.e., the requester does not get charged for the line item) Hidden field, No Charge is updated on the Requisition Line Item with a "Y". If the Renew Subscription and Change Quantity to «Current Subscription Quantity + Quantity Requested» is selected the following occurs: The List's End Date is set to the List's current End Date plus a year in the database. The List's Quantity is updated to the «Current Subscription Quantity + Quantity Requested» in the database. The Requisition Line Item's Comments get pre-appended with the following value, "Subscription updated to a total quantity of «Current Subscription Quantity + Quantity Requested» and is good through «List's End Date + 1 year»." (Note: This value does not get updated to the database until the Requisition Line is updated.) The Requester is charged the full amount on the Requisition. If the Renew Subscription and Change Quantity to « Quantity Requested» is selected the following occurs: The List's End Date is set to the List's current End Date plus a year in the database. The List's Quantity is updated to the « Quantity Requested» in the database. The Requisition Line Item's Comments get pre-appended with the following value, "Subscription updated to a total quantity of « Quantity Requested» and is good through «List's End Date + 1 year»." (Note: This value does not get updated to the database until the Requisition Line is updated.) If the Quantity Requested is greater than the Current Subscription Quantity the following occurs: Quantity Requested is changed to the Quantity Requested - Current Subscription Quantity. The U/M changes to the base unit of measure. If the Quantity Requested is less than the Current Subscription Quantity the following occurs: The Quantity Requested remains the same. Price of 0 displays for the Requisition Line Item. (i.e., the requester does not get charged for the line item) Hidden field, No Charge is updated on the Requisition Line Item with a "Y". Quantity Requested remains the same and no charge is applied to the Requisition Line Item. If the Cancel Subscription radio button is selected, the following occurs: The List's End Date is set to the current date minus 1 day in the database. The Requisition Line Items Comments get pre-appended with the following value, "Subscription has been cancelled." (Note: This value does not get updated to the database until the Requisition Line is updated.) No charge is applied to the Requisition Line Item. (i.e., the Pick Ticket does not assign a price to the disbursement). User clicks the Cancel button. Either the Item ID, Warehouse ID, U/M, or Quantity Requested get blanked out based on which field caused the window to be opened.

Sign Up Mode. Window opens (See Fig. 5 Subscription Management Window - Sign Up Mode) Message Displays saying, "Add Requester «Requester ID>> - «Requester Name» to Subscription «Item ID>> - «Item Description». This Change is not reversible. By Clicking Yes, you authorize us to ship and charge you for material for this subscription as it becomes available. Do you want to sign up for this subscription? [Yes/No]" Yes button is enabled. No button is enabled. User clicks the OK button. The list is updated in the database with the following values:
Person ID = Requester ID
Code Type = the item's List Type ID
Code ID = the item's List Code ID
Subscription Type = the item's Subscription Type
Start Date = the current date
End Date = the current date + 1 year
Quantity = Requested Quantity

The requisition line Comments get pre-appended with the following value, "Subscription created for a total quantity of « Quantity Requested» and is good through «Current Date + 1 year»." (Note: This value does not get updated to the database until the Requisition Line is updated.) User clicks the Cancel button. The Item ID, Warehouse ID, U/M, or Quantity Requested is blanked out based on which field caused the window to be opened.

Programmer Comments. Users will use a subscription item with inclusions. It is important that the subscription screens appear before the inclusion screen when requisitioning an item. The Subscription Management window that opens in Requisition Entry and NetLink needs to open before the Inclusion window. The Edit Subscription Page window that opens when you add an item to the cart in ReqDirect needs to open before the Inclusion page. InteliJob needs to be added as a valid module to the Key file (specplus.key). New Type, "SUBSTYPE" is being added to the List Setup use case in InteliJob. Work with the InteliJob team to ensure this is added to the database at the correct time.

**Table 1:**

| Spectrum Plus table modifications | | |
|---|---|---|
| Item | | |
| Table Comments: Add the following columns. | | |
| Column | Data Type | Comments |
| list_type_id | Varchar (8) | Null |
| list_code_id | Varchar (20) | Null |
| Subscription_type | Varchar (20) | Null |

| Reqsitem | | |
|---|---|---|
| Table Comments: Add the following columns. | | |
| Column | Data Type | Comments |
| yn_no_charge | char (1) | Null |

| Rdrqcart | | |
|---|---|---|
| Table Comments: Add the following columns. (Note: comments column already exists in the table) | | |
| Subscription_quantity | decimal (11,2) | Null |
| Subscription_end_date | Datetime | Null |
| yn_no_charge | Char ( 1 ) | Null |

**Table 2:**

| Configuration Changes | | | |
|---|---|---|---|
| CONFIGURATION CHANGES | | | |
| Section | Entry | Value | Comments |
| InteliJob | ListUniqueSubscrip tionType | 0 or 1 | 0=Use List Type and List Code to identify a unique subscription; 1= Use List Type, List Code and Subscription Type to identify a unique subscription. The default is 1. |

**Table 3:**

| Add New Item Type SUBSCRIPTN | |
|---|---|
| Itemtype | |
| Column | Value |
| Item_type | SUBSCRIPTN |
| Title | Subscription |
| yn_create_disbitem | Y |
| yn_stock | N |
| yn_kit | N |
| yn_subscription | Y |
| yn_asset | N |
| yn_ap_upload | Y |
| yn_{J}gl upload | Y |
| yn_show_on_pick | Y |
| Pick_ticket_code | SCR |
| yn_def_serial | N |
| yn_def_chargeable | Y |
| yn_def taxable | Y |
| yn_def_critical | N |
| yn_def_seasonal | N |
| yn_def_imprint | N |
| yn_def_bid_require | N |
| yn_def_round_pkg | N |
| yn_allow_item | Y |
| yn_allow_specs | Y |
| yn_allow_bin | N |
| yn allow_printlink | N |
| yn_allow_bid | N |
| yn_allow_po | N |
| yn_allow_invmatch | N |
| yn_allow_req | Y |
| yn_aUow_roem_req | Y |
| yn_allow_receipt | N |
| yn_allow_qreceipt | N |
| yn_allow_blanket | N |
| yn_allow_transfer | N |
| yn _allow_credit | Y |
| yn_allow_physical | N |
| yn_allow_qclose | N |
| When_usage | 1 |
| yn allow kit | Y |
| pt_template_file | NULL |
| yn_manual_req_fill | N |
| Req_gen_msg | NULL |
| Req_partial_msg | NULL |
| Req_bko_msg | NULL |
| yn_qty_available | N |
| yn_shipping_date | N |
| Create_id | 9999 |
| Create_application | 0 |
| Create_datetime datetime | 3-6-1998 0:0:0.000 |
| Edit_id | NULL |
| Edit_application | NULL |
| Edit_datetime | NULL |

Push Distribution. Push distribution is one of the functionalities provided in the Job Tracking module of the InteliJob portion of the Spectrum Plus system. The Job Tracking module allows users to setup different jobs, and track their status. Jobs can have different types of tasks such as requisitions or distributions. In a normal workflow, distributions are generated based upon requisitions from customers. There are other situations when distributions need to be generated based upon other factors such as customers signing up for products as subscribers, or when they are entitled to receive them because there are revisions to the product. The ability to generate distributions based upon predefined lists, and special criteria is called Push Distributions.

This has been accomplished in Spectrum Plus by assigning special types of codes to items and people. Items in this case refer to the actual documents or manuals and people refer to clients, to whom the items are distributed. By assigning codes to items and people, a list of people who should receive that item can be generated when required. One or more codes can be assigned to a person. A fixed quantity is also assigned for each person, so that when a distribution list is generated the total quantity can also be determined. After this list has been generated, more people can be added to it manually before finalizing the distribution list. This list can be stored for future use. If there are new revisions to an existing item, it is imperative that the same item be resent to all previous users. In such situations, by retrieving a list of all people associated with the required item code, a new list can also be created. Once the distribution list is finalized, shipping labels can be generated for each person on the list.

The list of people can be further grouped based upon their addresses or shipping preferences. For example, people living in Alaska may always prefer to use airmail. Along with codes there is also a default account code assigned to a person. When distributions are generated the associated costs plus any additional markup and a handling charge can be billed to individual account numbers. Alternatively, in situations when individual charges are not required a common account code can be assigned as the default account number to a group of people.

The Job Tracking module combines the power of the Internet and provides an easy to use Web based user interface. The application is built on the Windows platform, with an easy to follow workflow. There are configuration settings in the application, which allow the workflow to be customized. The application uses ODBC compliant relational database, thus making it easily extensible. Data generated from all processes is stored in the database, and can be further used for creating custom reports. By using the existing reports users can easily analyze the total number of people or items associated with specific codes or the quantities required to fulfill distributions.

By integrating with the inventory management functionality of Spectrum Plus, the application provides warehouse administrators with timely warnings if items are not available for fulfillment, thus allowing them to plan in advance. At the time when distributions tasks are being setup, required quantities based upon individual requirements are calculated and compared against existing inventory to make sure that the distributions can be fulfilled. If quantities are insufficient a warning message is displayed to users. Once a distribution task is executed successfully, an email notification is sent to the planners or coordinators with links to a detailed report.

The application also integrates with the Shipping interface. As a result all shipping charges can be allocated back to respective budget centers. The Push Distribution functionality can be used for clients who require production manuals for their products and training manuals for people who organize training sessions for people when a new product or service is launched. There are also service agents and subscribers who sign up to receive these manuals. In addition when new revisions of the same manual are printed, an updated version of the same documents has to be resent to these people. As such there is always a need to maintain a list of people associated with products. The system administrator can maintain the product person associations and then allow warehouse administrators to add different jobs, tasks and create distribution lists. In addition, by providing multi-layered security, the application allows users to set up different groups of users based upon their roles and functions. By using this feature, different users can be limited to using different sets of functionalities.

## Claims

1. An end user managed subscription system, comprising:
a database for storing a plurality of subscription offerings, wherein a subscription offering includes physical materials to be distributed on a periodic basis for a fixed period of time to a selected number of recipients;
a web based application operating on a host device, wherein the web based application includes a user interface;
an order entry module for displaying the plurality of subscription offerings and available options in the user interface, for prompting a user to make selections from the available options displayed in the user interface and, responsive to a user selection of a particular subscription offering, for enabling the particular subscription offering for that user; and
a push distribution module, responsive to enablement of the particular subscription offering, for distributing the physical materials on the periodic basis for the fixed period of time to the selected number of recipients.

2. The end user managed subscription system of claim 1, wherein the order entry module further displays a link for managing existing subscriptions in the user interface, wherein responsive to a user selection of the link, the order entry module displays the user's existing subscriptions and options available, and responsive to the user's modification of an existing subscription and options, enables the selected modifications and options.

3. The end user managed subscription system of claim 1, wherein the order entry module, for each subscription offering, displays an option for number of recipients.

4. The end user managed subscription system of claim 1, wherein responsive to to a user selection of a particular subscription offering, the order entry module prompts the user for authorization to ship and charge the user for the particular subscription.

5. The end user managed subscription system of claim 1, wherein the available options for each subscription offering include quantity of physical materials, number of recipients and address for each recipient.

6. The end user managed subscription system of claim 1, further comprising a tracking module for tracking status of user selected subscriptions.

7. The end user managed subscription system of claim 1, wherein the physical materials comprise collateral, manuals, manual updates and revisions and newsletters.

8. A method of enabling an end user to manage subscriptions, comprising:
storing a plurality of subscription offerings in a database, wherein a subscription offering includes physical materials to be distributed on a periodic basis for a fixed period of time to a selected number of recipients;
providing a web based application operating on a host device, wherein the web based application includes a user interface;
displaying the plurality of subscription offerings and available options in the user interface;
prompting a user to make selections from the available options displayed in the user interface;
responsive to a user selection of a particular subscription offering, enabling the particular subscription offering for that user; and
responsive to enablement of the particular subscription offering, distributing the physical materials on the periodic basis for the fixed period of time to the selected number of recipients.

9. An end user managed subscription process in combination with a distribution process, comprising:
creating a job including items for distribution;
providing one or more identifiers who subscribe to the items for distribution;
identifying items, including subscriptions, to be distributed;
associating the identified items to the one or more identifiers who subscribe to the items for distribution;
entering a price for each item;
creating one or more requisitions to reserve the items for distribution;
calculating a total price;
enabling an-end-user to select subscriptions and place them in the end user's shopping cart; and
sending bills to a cost center.

10. A distribution process including an end user managed subscription process, comprising:
identifying a job including items for a subsequent distribution;
providing one or more requisition tasks in the job to reserve items from an inventory for the distribution;
enabling an end user to select subscriptions;
performing a distribution task to generate an item list, including selected subscriptions, and people list for the distribution;
calculating costs;
performing packaging instruction shipping information; and
allocating charges.
